# EUROPEAN PATENT SPECIFICATION

(11) **EP 1 939 264 B1**
(45) Date of publication and mention of the grant of the patent: **24.03.2010**
(21) Application number: 06127253.0
(22) Date of filing: 27.12.2006
(51) Int. Cl.: C09K 8/467, C04B 28/02, C04B 40/00, C04B 40/02

(54) **Low permeability cement systems for steam injection application**
Zementsysteme mit geringer Durchlässigkeit für Dampfinjektionsanwendung
Systèmes de ciment à perméabilité basse pour l'application d'injection de vapeur

(43) Date of publication of application: 02.07.2008
(73) Proprietor: Services Pétroliers Schlumberger, 75007 Paris (FR); Schlumberger Technology B.V., 2514 JG The Hague (NL); Schlumberger Holdings Limited, Road Town, Tortola (VG); PRAD Research and Development N.V., Willemstad, Curacao (AN)
(72) Inventor: Thery, Frederic, 75014 Paris (FR); Drochon, Bruno, 93160 Noisy le Grand (FR)
(74) Representative: Vandermolen, Mathieu

(56) References cited:
- WO-A-2004/078671
- DE-A1- 19 522 723
- US-A- 3 368 623
- US-A- 4 094 694

## Description

### Technical field

This invention relates to a cement additive for the use in cementing oil wells or the like, in particular the invention relates to a low glass transition (Tg) polymer as a plugging agent for a cement composition.

### Background art

In a general well cementing operation, a cement slurry is prepared at the surface and pumped into the well to fill the annulus between the casing and the borehole wall to provide zonal isolation and mechanical support. Interest in the recovery of heavy oil is increasing because of the huge reserves of heavy oil existing whereas reserves of light oil are decreasing. Thermal recovery processes are one of the main means of recovering heavy oils. Thermal methods work by increasing the temperature of the oil which will decrease the viscosity of the oil. One of the main thermal methods used is steam injection. However one of the issues for zonal isolation is the permeability of cement after steam injection operations. When initially set, the cement can provide a good seal, however changes in pressure and temperature during repeated steam injection procedures can induce stresses and affect the integrity of the cement.

Systems used for such application are typically conventional low density cement which become highly permeable after a few steam injection cycles. It is common that temperatures around 300°C are reached within the cement sheath and generally the set cement will lose strength and gain permeability after regular steam injection. This can cause zonal isolation to be lost and induce cored casing and/or steam leakage. As such the lifetime of thermal recovery wells is shortened by all these stresses the cement is placed under.

Lost circulation problems often occur due to weak and unconsolidated formations of such wells therefore low density cement systems are required however this is detrimental in terms of set cement properties, as water permeability of set cement is inversely proportional to the density of conventional cement. Heavy oil wells exposed to thermal recovery processes belong mainly to the low tier markets where low slurry pricing is a key point to be competitive.

One cement system developed, FlexSTONE (Schlumberger), maintains high compressive and tensile strengths compared to conventional cements, and is used in steam flood operations. However the permeability of the cement is still a problem at 300°C.

WO2004/078671 describes a flexible cementing composition for high temperature wells, the cement composition comprising acrylonitrile-butadiene co-polymer particles. DE19522723 describes a composition comprising a cement and a wax emulsion for forming a impervious wall. US4094694 also describes a cementitious composition for the building industry having a high degree of water resistant and formed from calcined gypsum and an emulsion of asphalt and wax.

Therefore the object of the invention is to provide a cost effective additive to increase the long-term permeability performances of set cement.

### Disclosure of the invention

A first aspect of the invention comprises a method for plugging the porosity of a cement matrix in a well comprising pumping a cement slurry comprising a plugging agent polymer with a glass transition temperature (Tg) point below 150°C into a well; setting the cement in a well; heating the cement above the Tg point of the plugging agent; and cooling the cement so that the plugging agent will solidify.

Having a low Tg point means that the polymer will melt at temperatures reached during thermal operations in the well, and flow into the pores of the cement matrix.

Preferably the method comprises performing a steam injection operation to heat the cement.

Preferably the polymer in the cement slurry composition is a wax. In a preferred composition the polymer is in the form of a polyethylene wax emulsion, polypropylene wax emulsion, carnauba wax emulsion or a scale wax emulsion. Waxes are a cost efficient additive that can be used.

The cement slurry composition can be a low density cement.

The method is for lowering the permeability of a cement composition in a well.

### Brief description of the drawings

Figure 1 shows the dimensional range of solids and pores in hydrated cement paste;
Figure 2 shows a SEM of a capillary pores in a hardened cement paste; and
Figure 3 shows a graph of pore diameter(nm) versus penetration volume (cm³/g).

### Mode(s) for carrying out the invention

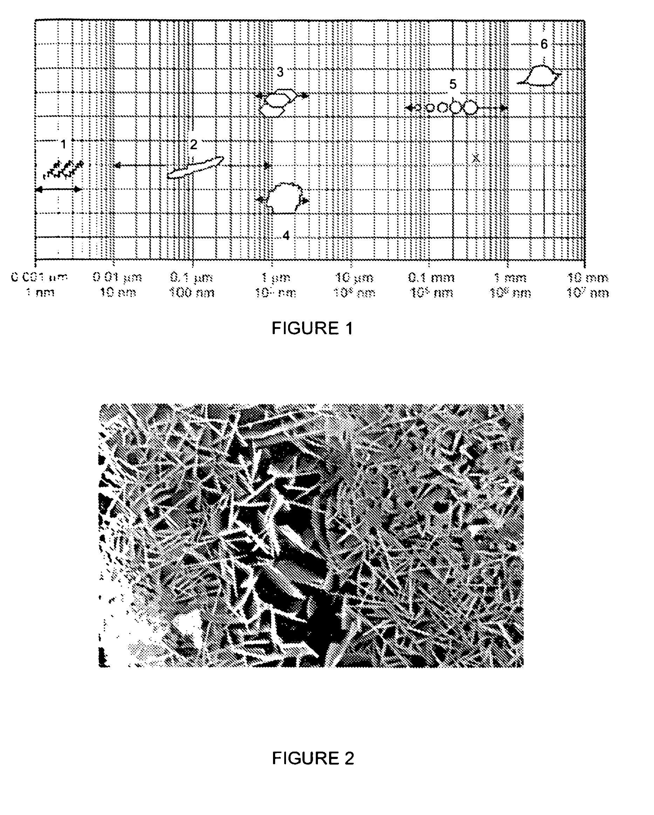

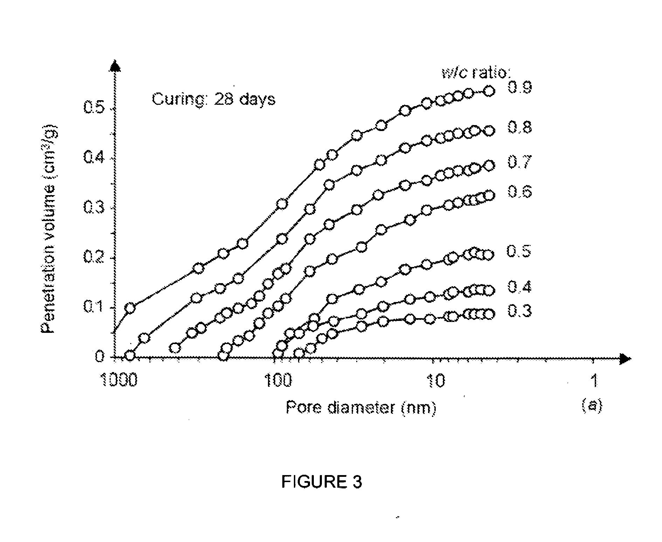

When the cement is hydrated, interconnected pores of different sizes are formed, as shown in Figure 1. Pores in the cement matrix are formed by interparticle spacing between C-S-H sheets 1, capillary voids 2, hexagonal crystals of Ca(OH)2 or low sulphate in cement paste 3, aggregation of C-S-H particles 4, entrained air bubbles 5, entrapped air voids 6. The pores can be divided into macropores, capillary pores and gel pores. The interlayer spacing between C-S-H (gel pores) typically have a volume equal to about 28% of the gel and dimensions ranging from a few fractions of nm to several nm. These types of pores do not affect the durability of the material because they are too small to allow significant transport of aggressive species. The capillary pores are the voids not filled by the solid products of hydration of hardened cement paste. Figure 2 shows a cement consisting of micro-capillaries between the plate shaped crystals, a macro-capillary is also visible. The capillary pores typically have the dimensions of 10nm to 1 micron, depending on the curing time and on the water to cement ratio. Figure 3 depicts the pore diameter versus penetration volume. The capillary pores govern the durability of the material. To prevent interzonal communication, the permeability to water should not exceed 0.1 mD. Therefore the invention provides cement slurries having solid particles that will fill the marcopores and when melted can flow through the smaller pores to reduce the pore interconnections, and therefore the permeability of the cement.

Solid particles of the additive are introduced into the cement slurry. The particles have a size that allows the particles to be inserted into the macropores when the cement is hydrated, then when the temperature goes above the melting of these particles (during steam injection), the melted fluid flows through smaller pores reducing the pores interconnections.

When the formation temperature is higher than the Tg of the polymer, such as during steam injection operation, the polymer will melt. Once the steam injection is over, temperature will cool down and the organic additive will solidify. Once the polymer is melted it is able to flow through the cement matrix, thus the polymer mobility will increase, and plug the microporosity of the cement. The formation fluids will first be blocked by the liquid state of the polymer during the steam injection operation and then by the resolidified polymer once the thermal recovery process is stopped and the cement matrix has cooled down. Water permeability of the set cement will be reduced because of the build up of plugs in the connected porosity. Only a few different areas in the connected porosity need to be plugged to be efficient and to maintain a low cement permeability.

The additive can be products such as D600 (styrene-butadiene latex), D700, D181 (polypropylene), or waxes. Preferred products are water based wax emulsions, as they contain a high content of solid for a low viscous fluid, as for a latex, but will not form a film during the hydration of cement, contrary to latex. Waxes are also cost effective. Preferred products include:

| Material | Commercial name | Particle size | Melting point |
|---|---|---|---|
| Polyethylene Wax Emulsion | Michem® Emulsion 39235 | 0.35µ | 139°C |
| Polypropylene Wax Emulsion | Michem® Emulsion 43040 | 0.45µ | 157°C |
| Carnauba Wax Emulsion | Michem® Emulsion 67135 | 0.150µ | 82°C |
| Scale Wax Emulsion | Michem® Emulsion 70750.E | 0.500µ | 50°C |

### Examples

A water permeability set-up working around 60-70°C is used. Candidate polymer additives with a Tg around 40-50°C are selected. Three heavy oil cement systems are prepared:

1. Reference system:
1.6 kg/L (13.3ppg) with Class A Cement
40% BWOC (by weight of cement) D066 (silica flour)
D047 (antifoam - polypropylene glycol)
0.2% BWOC D065 (Turbulent flow inducer for cement (TIC) dispersant)
2% BWOC D020 (extender - bentonite)
This formulation is labelled "thermal 40% in Canada"

2. Thermal 40% with 0.18 Ukg (2 gal/sk) of scale wax emulsion (Michem® Emulsion 7050, 0.5 microns, solid volume factor (SVF)=52%, melting point 50C):
1 % D020 (extender - bentonite)
0.7% D065 (TIC dispersant)
0.05gps D175 (antifoam additive)

3. 1.52kg/L (12.75 ppg) slurry with an oil and water emulsion (O/E) - SVF is 30% Class A cement with 40% BWOC D066 (silica flour)
28% by volume of slurry of oil
42% by volume of slurry of water
2.5% by weight of oil of D701 (gas-control agent)
a few grams of D065 (TIC dispersant)

Sample preparation

The sample are mixed and undergo a first curing of 1 week at 40°C. A few cores of 0.05m (2-inch) length/0.025m (1 inch) diameter are extracted from each system. Then the samples are cured at 275°C (525°F) for 6 hours. Maximum temperatures is maintained for 45 hours, then cool down gently.

The curing time at 275°C is repeated for 1 week and then the samples are cooled down gently. This ensures that the reference system has deteriorated sufficiently (permeability >0.1mD).

Water permeability measurements of the three samples are taken at room temperature, and over 60°C (> melting point of the wax emulsion) and at 140°C for the reference and wax systems.

Results:

| Sample Identification | Specific permeability, mD | Core description |
|---|---|---|
| Three 0.025m (1") diameter cement plug samples, measurements at room temperature | | |
| Ref | 0.184 | Med grey, fine-med mottled texture, good plug |
| Wax | 0.205 | Med grey, fine-med mottled texture, good plug |
| O/E | 0.715 | It grey, fine-med mottled texture; good plug |
| | | |
| Two 0.025m (1") diameter cement plug samples, measurements at 140°C | | |
| Ref | 0.236 | Med grey, fine-med mottled texture, good plug |
| Wax | 0.092 | Med grey, fine-med mottled texture, good plug |

Crush tests after curing - 1 cylinder/system
1. Ref = 22063 kPa (3200 psi)
2. Wax = 13100 kPa (1900 psi)
3. O/E = 12410 kPa (1800 psi)
After crushing a purple/blue colour in the matrix of system 2 is observed.

The oil droplets of the O/E act as fine particles but do not block the water permeability.

The water permeabilities are similar at room temperature (0.18 and 0.20mD). This is expected and the value agrees with the extended system.

At 140°C, the water permeabilities are no longer similar between the reference and wax systems. The wax system has lower water permeability than the reference system, 0.09 compared to 0.236mD. The water permeability of the wax system at 140°C is lower than at room temperature, 0.09 compared to 0.205mD.

As can be seen from the comparative measurements of water permeability the melted polymer has the ability to lower the connected porosity of a cement matrix. Concentration, molecular weight and particle shape will also have an impact on the mobility of the melted polymer.

## Claims

1. A method for plugging the porosity of a cement matrix in a well comprising:
pumping a cement slurry comprising a plugging agent polymer with a glass transition (Tg) point below 150°C into a well;
setting the cement in a well;
heating the cement above the Tg point of the plugging agent; and
cooling the cement so that the plugging agent will solidify.

2. A method according to claim 1 comprising performing a steam injection operation to heat the cement.

3. A method according to claim 1 or claim 2 wherein the method is for lowering the permeability of a cement composition in a well.

4. A method according to claims 1, 2 or 3 wherein the polymer is a wax.

5. A method according to claim 4 wherein the polymer is in the form of a polyethylene wax emulsion, polypropylene wax emulsion, carnauba wax emulsion or a scale wax emulsion.

## Patentansprüche

1. Verfahren zum Verstopfen der Durchlässigkeit einer Zementmatrix in einem Bohrloch umfassend:
Pumpen eines Zementschlamms in ein Bohrloch, das ein Polymer-Verstopfungsagens mit einem Glasübergangs (Tg) Punkt unterhalb 150°C aufweist,
Abbinden des Zements in einem Bohrloch,
Heizen des Zements über den Tg-Punkt des Verstopfungsagens und Kühlen des Zements, so dass das Verstopfungsagens sich verfestigt.

2. Verfahren nach Anspruch 1, umfassend ein Durchführen einer Dampfeinleitungshandlung um den Zement zu heizen.

3. Verfahren nach Anspruch 1 oder 2, wobei das Verfahren zur Verringerung der Permeabilität einer Zementzusammensetzung in einem Bohrloch ist.

4. Verfahren nach einem der Ansprüche 1 bis 3, wobei das Polymer ein Wachs ist.

5. Verfahren nach Anspruch 4, wobei das Polymer in der Form einer Polyethylenwachs-Emulsion, einer Polypropylenwachs-Emulsion, einer Karnaubawachs-Emulsion oder einer Kesselsteinwachs-Emulsion ist.

## Revendications

1. Procédé pour colmater la porosité d'une matrice de ciment dans un puits, comprenant :
le pompage d'un coulis de ciment comprenant un polymère d'agent colmatant ayant un point de transition vitreuse (Tg) inférieur à 150 °C, dans un puits ;
la prise du ciment dans un puits ;
le chauffage du ciment au-dessus du point de Tg de l'agent colmatant ; et
le refroidissement du ciment de sorte que l'agent colmatant va solidifier.

2. Procédé selon la revendication 1, comprenant 1a réalisation d'une opération d'injection de vapeur pour chauffer le ciment.

3. Procédé selon la revendication 1 ou la revendication 2, lequel procédé est destiné à abaisser la perméabilité d'une composition de ciment dans un puits.

4. Procédé selon les revendications 1, 2 ou 3, dans lequel le polymère est une cire.

5. Procédé selon la revendication 4, dans lequel le polymère est sous la forme d'une émulsion de cire de polyéthylène, d'une émulsion de cire de polypropylène, d'une émulsion de cire de carnauba ou d'une émulsion d'écaille de paraffine.
